# EUROPEAN PATENT APPLICATION

(11) **EP 4 557 026 A1**
(43) Date of publication of application: **21.05.2025**
(21) Application number: 23839527.1
(22) Date of filing: 04.07.2023
(51) Int. Cl.: G05B 19/05

(54) **CONTROL PROGRAM EDITING DEVICE, EDITING METHOD, AND PROGRAM**

(30) Priority: 15.07.2022 JP 2022114135
(71) Applicant: OMRON Corporation, Kyoto 600-8530 (JP)
(72) Inventor: OKAYASU, Takahiro, Kyoto-shi, Kyoto 600-8530 (JP); KAGAWA, Tetsuo, Kyoto-shi, Kyoto 600-8530 (JP); FUJIMURA, Ryosuke, Kyoto-shi, Kyoto 600-8530 (JP)
(74) Representative: Becker, Eberhard
(86) International application number: PCT/JP2023/024760
(87) International publication number: WO 2024/014355

(57) **Abstract**

Provided is a control program editing device that can use an appropriate instruction even when the user does not know an instruction to be utilized and the function thereof. A control program editing device (1), which is used to edit a control program, comprises: a search word input unit (11) that receives a user input of a search word as a user instruction for inputting an instruction; an instruction list acquisition unit (12) that acquires an instruction list of instructions, instruction names, and function descriptions; an extraction unit (13) that extracts instructions related to the search word; and a display control unit (14) that displays the instructions extracted by the extraction unit, instruction names, and function descriptions. A user input for selecting one instruction from among the displayed instructions is received and applied to the control program.

## Description

### Technical Field

The present invention relates to a control program editing device.

### Related Art

Generally, programs are developed through IDE (Integrated Development Environment). In IDEs, to reduce the amount of user input, an input assistance functionality is incorporated that complements the input content based on the input information. For example, Japanese Patent Laid-Open Publication No. 1 discloses an input assistance method for variable names in PLC (Programmable Logic Controller) programming. In this input assistance method, variables having variable names that include an input character string are extracted from among only prestored variable names and are displayed in a list.

In FA (Factory Automation) systems, PLCs are commonly used. Numerous instructions are prepared in PLCs, and users create programs by appropriately using the numerous instructions.

### Citation List

### Patent Literature

Patent Literature 1: Japanese Patent Laid-Open Publication No. 2005-352612

### SUMMARY OF INVENTION

### Technical Problem

The number of instructions prepared for PLCs is enormous, and an instruction search functionality is used so as to find the desired instruction. The instruction search functionality, generally, allows only forward match searches for instructions, so users need to judge whether the instructions displayed as search results are appropriate or not, and then create the programs. In other words, users need to be familiar with the instructions and their functionalities.

One aspect of the present invention aims to provide a control program editing device that enables users to create a program using appropriate instructions even if they are not familiar with the instructions they want to use and their functionalities.

### Solution to Problem

To solve the problem, a control program editing device according to one aspect of the present invention is a control program editing device for editing a control program of an FA system, which includes: a search term input unit that receives user input of a search term as a user indication for inputting instructions to the control program; an instruction list acquisition unit that acquires an instruction list including candidates of the instructions; instruction names corresponding to the respective instructions; and functionality descriptions corresponding to the respective instructions; an extraction unit that extracts the instructions related to the search term from the instruction list; a display control unit that performs control to display the instructions extracted by the extraction unit, the instruction names of the instructions, and the functionality descriptions of the instructions; a selection unit that receives user input for selecting one of the instructions from among the instructions displayed by the display control unit; and an application unit that inputs the instruction selected by the selection unit into the control program.

To solve the problem, an editing method for control program editing device according to another aspect of the present invention is an editing method of control program editing device for editing a control program of an FA system, which includes: a search term input step of receiving user input of a search term as a user indication for inputting instructions to the control program; an instruction list acquisition step of acquiring an instruction list including candidates of the instructions, instruction names corresponding the respective instructions, and functionality descriptions corresponding to the respective instructions; an extraction step of extracting the instructions related to the search term from the instruction list; a display control step of performing control to display the instructions extracted by the extraction step, the instruction names of the instructions, and the functionality descriptions of the instructions; a selection step of receiving user input for selecting one of the instructions from among the instructions displayed by the display control step; and an application step of inputting the instruction selected by the selection step into the control program.

According to the configuration, when inputting an instruction, the user can select the instruction while confirming the instruction, instruction name, and functionality description. Therefore, the user can input an instruction even if they are not familiar with the instruction and its functionality.

### Effects of Invention

According to one aspect of the present invention, appropriate instructions can be input even if the user is not familiar with the instructions.

### BRIEF DESCRIPTION OF DRAWINGS

[FIG. 1] A block diagram showing a configuration of main parts of a control program editing device according to Embodiment 1.
[FIG. 2] A flowchart showing an operation example of the control program editing device according to Embodiment 1.
[FIG. 3] A diagram showing an example of extracted instructions.
[FIG. 4] An example of a screen for selecting a function instruction at a stage where no search term has been input.
[FIG. 5] An example of a screen for selecting a function instruction at a stage where "timer" has been input as a search term.
[FIG. 6] An example of a screen for selecting a function instruction at a stage where "timer TRUE" has been input as a search term.
[FIG. 7] An example of a screen at a stage where an instruction has been selected based on the extraction results.
[FIG. 8] An example of a screen representing the processing in a case where the type of the selected instruction differs from that of the circuit component.
[FIG. 9] A diagram showing the extracted results sorted and displayed with priority.
[FIG. 10] An example representing the priority of display order in the display control unit.

### DESCRIPTION OF THE EMBODIMENTS

The following describes an embodiment related to one aspect of the present invention (hereinafter also referred to as "the present embodiment") based on the drawings. In the drawings, the same or equivalent parts are denoted by the same reference numerals, and descriptions thereof are not repeated.

### §1. Application Example

The creation of PLC programs is performed using a control program editing device represented by IDEs. The control program editing device allows development in five languages specified by IEC61131-3. In these languages, programs are created using functions that have a single functionality, as well as function blocks that have complex functionalities constructed by combining contacts, coils, and functions to control devices.

There are numerous functions and function blocks to meet various applications. Therefore, in the case of functions, after placing the circuit component of the function, the user selects which instruction to use to select the functionality of the function. The same applies to function blocks.

IDEs are equipped with an input assistance functionality that, when inputting instructions for functions or function blocks, searches by describing a part of the instruction, and displays a list of instructions corresponding to the search term.

In the present embodiment, as the input assistance functionality, in addition to instructions, it is possible to perform searches (extractions) targeting the instruction name of the instruction (name in various languages being used) and the functionality description of the instruction (functionality description performed by the instruction in various languages being used). Therefore, even in cases where the user does not remember the instruction (command) at all and only remembers the functionality of the instruction, it becomes possible to select and input the correct instruction using the input assistance functionality.

### §2. Configuration Example

### (Control program editing device 1)

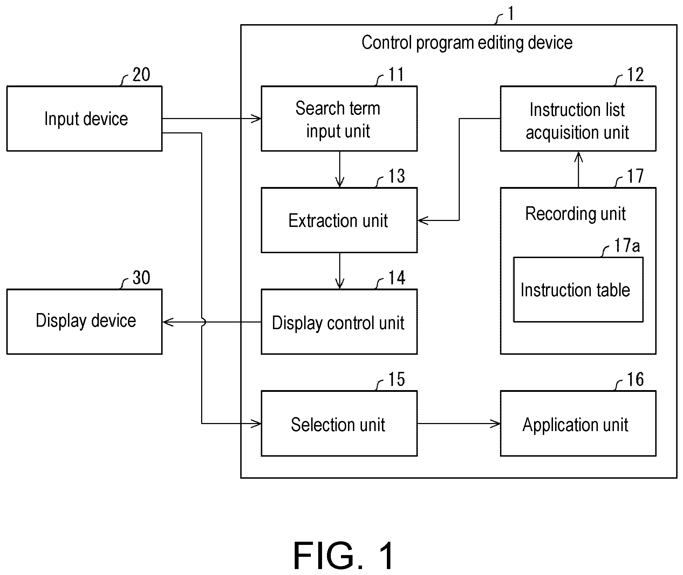

FIG. 1 is a block diagram showing a configuration of main parts of a control program editing device 1 according to Embodiment 1. The control program editing device 1 includes a recording unit 17, a search term input unit 11, an instruction list acquisition unit 12, an extraction unit 13, a display control unit 14, a selection unit 15, and an application unit 16. Moreover, the control program editing device 1 is connected to an input device 20 such as a keyboard and mouse, and a display device 30 such as a display.

The recording unit 17 records an instruction table 17a used in the control program. The control program editing device 1 appropriately acquires the instruction table 17a from the recording unit 17 and realizes the input assistance functionality. Moreover, the instruction table 17a may be recorded in an external device (for example, a cloud server).

Furthermore, numerous instructions are recorded in the instruction table 17a. The instructions are functions that execute a single functionality, and function blocks that realize multiple functionalities. The content recorded in the instruction table 17a includes the command of the instruction (hereinafter referred to as the instruction), the instruction name of the instruction, and the functionality description of the instruction. The category of the instruction may also be recorded.

The search term input unit 11 receives user input of search terms for narrowing down to an appropriate instruction from multiple instructions. In other words, the search term input unit 11 allows user input of a search term using the input device 20 to search for (identify) character strings described in the instruction, instruction names related to the instruction, and the functionality description related to the instruction. The search term input unit 11 outputs the search term to the extraction unit 13.

The instruction list acquisition unit 12 acquires an instruction list that includes candidates of the instructions, instruction names corresponding to the respective instructions, and functionality descriptions corresponding to the respective instructions. The instruction list acquisition unit 12 outputs the instruction list to the extraction unit 13.

The extraction unit 13 extracts instructions, instruction names, and functionality descriptions related to the search term from the instruction list. An instruction is extracted as long as the search term is included in any of the instruction, instruction name, or functionality description. The details of this process will be described later. The extraction unit 13 outputs the extracted instructions to the display control unit 14.

The display control unit 14 displays the instructions extracted by the extraction unit 13 on the display device 30. At this time, the display control unit 14 displays the instructions, instruction names, and functionality descriptions together. Moreover, the type of instructions (function or function block) and the category of instructions (for example, "+", "ADD" are "arithmetic", etc.) may also be displayed together.

The selection unit 15 receives user input through the input device 20 to select one element from among the instructions displayed by the display control unit. The received user input is output to the application unit 16.

The application unit 16 inputs the element selected by the selection unit 15 into the control program. In other words, the selected instruction is input to the circuit component.

### §3. Operation Example

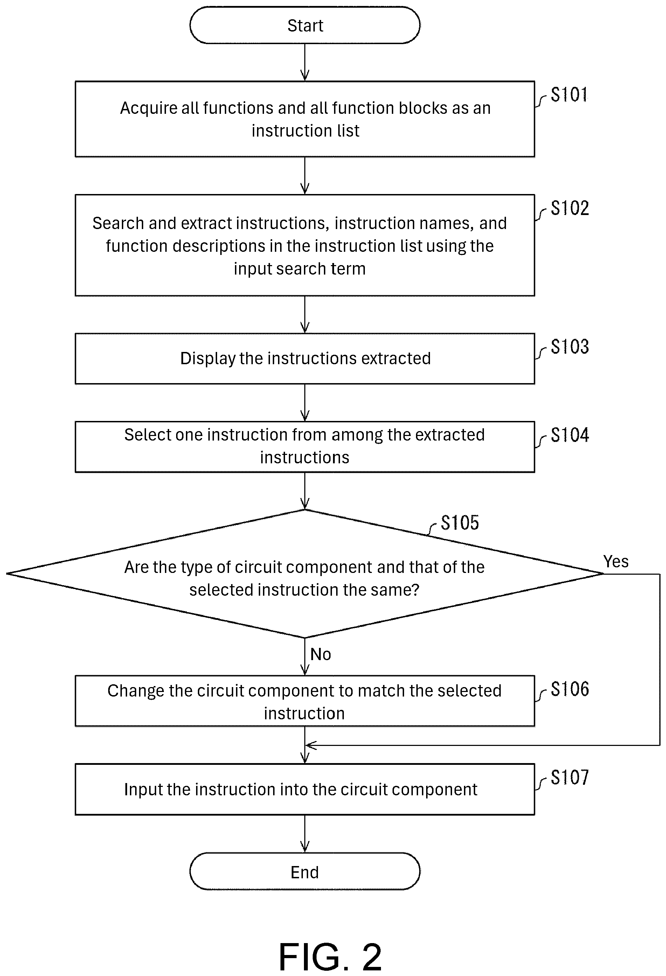

FIG. 2 is a flowchart showing an operation example of the control program editing device 1 according to Embodiment 1.

First, the instruction list acquisition unit 12 acquires the definition names of all functions and all function blocks as an instruction list (S101). Here, the instruction list includes instructions, instruction names corresponding to the instructions, and functionality descriptions corresponding to the instructions.

The search term input unit 11 receives the input of a search term as a user indication for inputting instructions into the control program. For example, an input search term may be "overflow". Hereafter, this example will be explained as a representative example.

The extraction unit 13 extracts instructions related to the search term from the instruction list (S102). For example, in the case where the search term is "overflow", instructions such as those with the instruction name "multiplication (with overflow check)" are extracted.

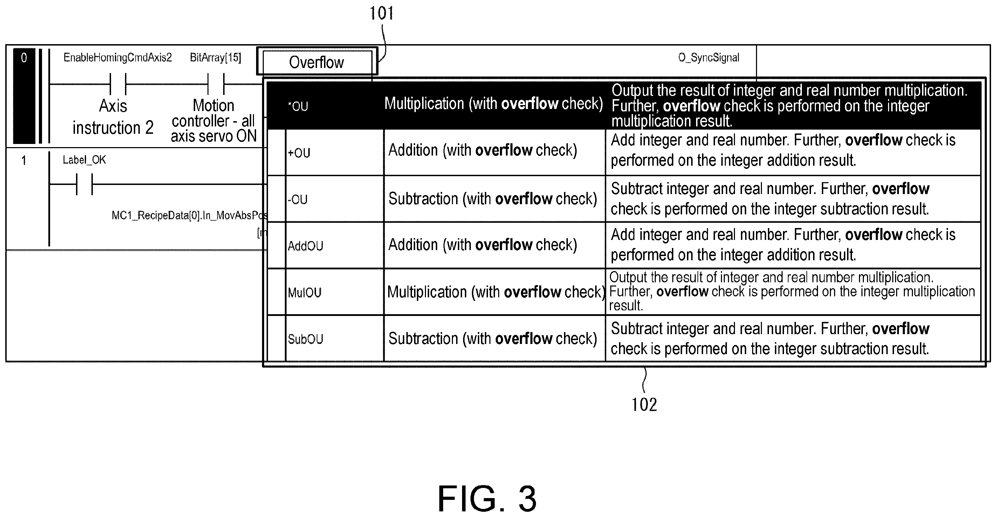

The display control unit 14 records and displays the instructions extracted by the extraction unit, along with the instruction names of the instructions and the functionality descriptions of the instructions 13 (S103). FIG. 3 is a diagram showing an example of extracted instructions. In FIG. 3, reference numeral 101 indicates the search term, and reference numeral 102 indicates the extracted instructions. In reference numeral 102, the search term may be emphasized by bold text or a change in text color. Moreover, the category of the instruction may be displayed together with the display content of the extracted instructions.

The selection unit 15 receives a user input for selecting one instruction from among the extracted instructions displayed by the display control unit 14 (S104). It then judges whether the type of the selected instruction and that of circuit component previously input are the same (S105). This is because in PLC programs, functions and function blocks have different instruction forms, so they need to be distinguished.

In the case where the type of the selected instruction and that of circuit component are the same (Yes in S105), the process proceeds to S107.

In the case where the type of the selected instruction and that of circuit component are different (No in S105), the application unit 16 changes the format of the circuit component to match the selected instruction (S106). In other words, if the selected instruction is a function and the circuit component is a function block, the circuit component is changed to a function, and vice versa.

The application unit 16 inputs the selected instruction into the circuit component (S107).

### (Extraction process and confirmation of circuit component)

The extraction process of instructions from the instruction list by the extraction unit 13 is described in more detail.

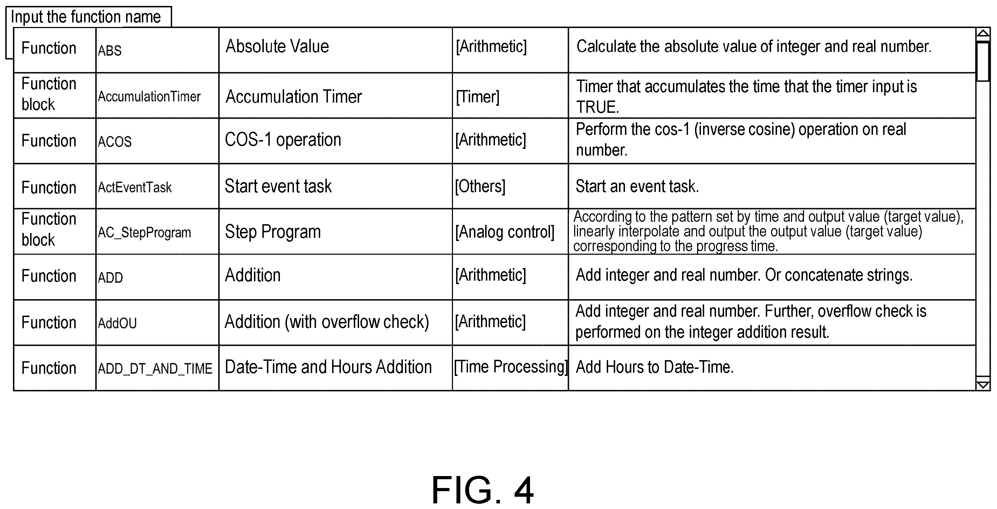

FIG. 4 is an example of a screen for selecting a function instruction at a stage where no search term has been input. As shown in FIG. 4, at the stage where no search term has been input, all functions and function blocks are displayed as extracted instructions. In other words, an instruction list is substantially displayed. The display order in this case is in ascending alphabetical order for the instructions, as no search term has been set.

In FIG. **4****,** the first column indicates whether it is a function or a function block, the second column indicates the instructions, the third column indicates the instruction names, the fourth column indicates the instruction categories, and the fifth column indicates the functionality descriptions. This display order is the same in subsequent figures.

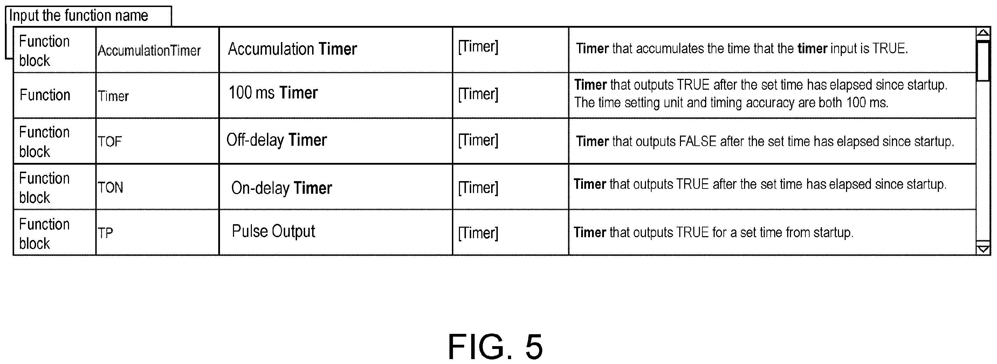

FIG. 5 is an example of a screen for selecting a function instruction at a stage where "Timer" has been input as a search term. FIG. 5 an example of a display in which "Timer" is extracted from the instruction list in FIG. 4, based on the description of "Timer" in the instruction name and functionality description. The instruction category may also be added to the search target.

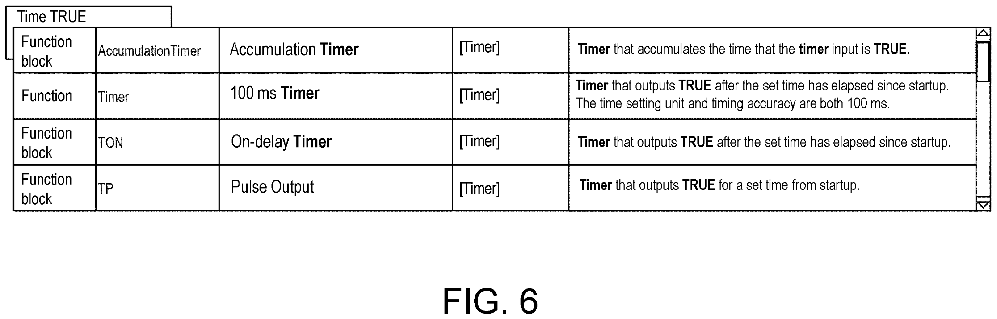

FIG. 6 is an example of a screen for selecting a function instruction at a stage where "Timer TRUE" has been input as a search term. In response to this input, the extraction unit 13 extracts "Timer" and "TRUE". In other words, as shown in FIG. 6, multiple search terms may be separated by spaces and searched with AND conditions for each. This allows for more precise narrowing down of instructions.

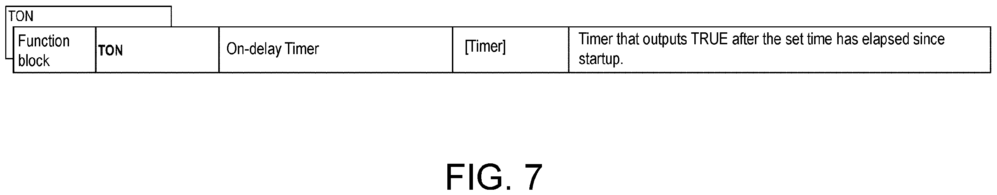

FIG. 7 is an example of a screen at a stage where an instruction has been selected based on the extraction results. Referring to FIG. 6, the user confirms an appropriate instruction, selects the appropriate instruction from among the displayed instructions, and inputs the instruction by pressing "ENTER". The input device 20 is not limited to keyboard operation, and may be clicked with a pointing device such as a mouse.

In this case, even if an appropriate instruction intended by the user has been selected, the instruction name and functionality description related to the instruction may be displayed. Through these correspondences, the user can confirm whether an appropriate instruction has been selected. In addition to this information, when a single instruction is selected, the corresponding section of the manual for the instruction may be displayed in a pop-up. In this case, the user can confirm the usage of the instruction without referring to the manual, thus reducing user effort.

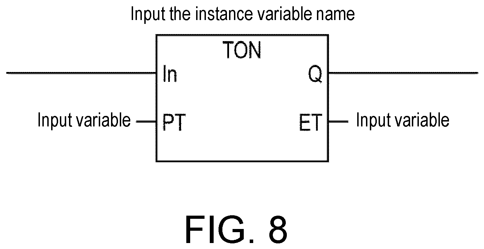

FIG. 8 is an example of a screen representing the processing in a case where the type of the selected instruction differs from that of the circuit component. In FIGS. 4 to 7, the search was performed using a function as the type of circuit component. In contrast, the type of instruction selected in FIG. 7 is a function block. Therefore, the type of the circuit component differs from the type of the selected instruction.

In the case where the type of the original circuit component differs from the type of the selected instruction, the program cannot be edited. Therefore, the application unit 16 changes the circuit component at the position selected by the user to a circuit component of the type of the selected instruction.

Specifically, in a state where the circuit component selected at a certain position is a function, because the "TON" instruction, which is a function block, has been selected, the circuit component at that position is changed from a function to a function block. As a result, in FIG. 8, it has changed to a function block, and the control program editing device 1 is requesting the user to input the instance name and variables for the function block.

Here, the display control unit 14 may control to display a graphical editing screen where figures representing circuit components constituting the control program are connected to each other.

### (Display order of extracted results)

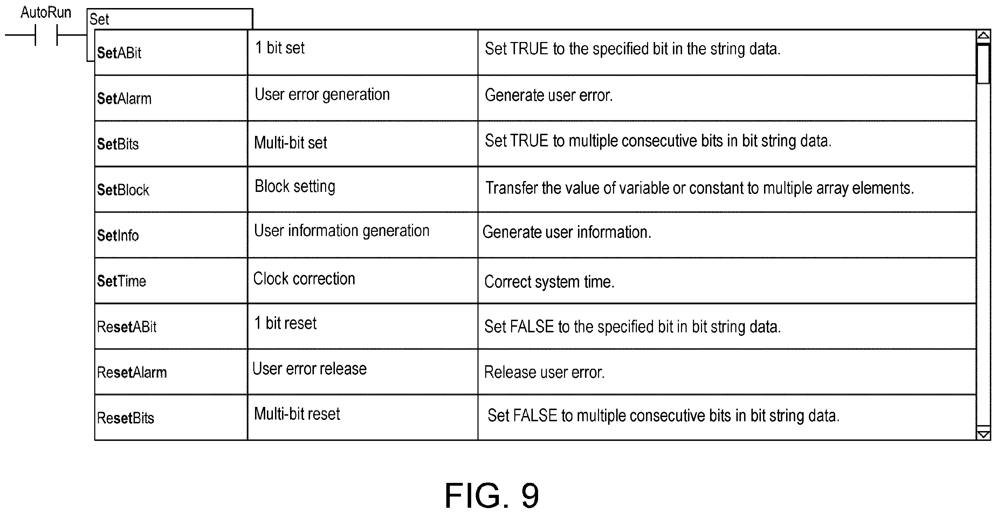

The display control unit 14 may sort the extracted results and display them with priority. FIG. 9 shows the extracted results sorted and displayed with priority.

As shown in FIG. 9, in the case where the search term is "Set", in addition to those starting with "Set", those containing "set" as represented by "Reset" and others may also be extracted. In this case, the extraction unit 13 makes a determination without distinguishing between uppercase and lowercase letters in the extraction process.

Moreover, in the display control unit 14, control is performed to display instructions that have a forward match with the search term with priority. Although the prefix of "Reset" is "R" and comes earlier in alphabetical order than the prefix "S" of "Set", "Set" comes before "Reset" because they are sorted based on forward match with the search term (in this case, "Set").

In the case where multiple search terms are input, the instructions search for using the previously input search are sorted such that priority is given to instruction that have a forward match with the search term, and then the next input search is used for search. Therefore, for the second and subsequent search terms, sorting may not be necessary.

### (Display order based on extraction target)

Moreover, the display control unit 14 may establish priority for the display order with respect to instructions, instruction names, and functionality descriptions. Specifically, the display control unit 14 first displays, among instructions extracted by the extraction unit 13, the instructions, instruction names of the instructions, and functionality descriptions of the instructions having the search term. Subsequently, the display control unit 14 displays, among instruction names extracted by the extraction unit 13, the instructions, instruction names of the instructions, and functionality descriptions of the instructions having the search term. Furthermore, after that, the display control unit 14 displays, among functionality descriptions extracted by the extraction unit 13, the instructions, instruction names of the instructions, and functionality descriptions of the instructions having the search.

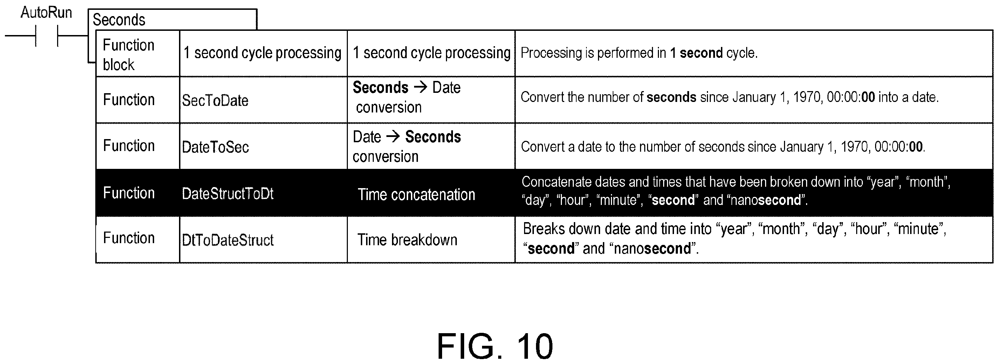

FIG. 10 shows an example representing the priority of display order in the display control unit 14. As shown in FIG. 10, in the case where "second" is specified as the search term, first, instructions that contain "second" are displayed with forward match. Next, instruction names that contain "second" are displayed with forward match. After that, functionality descriptions that contain "second" are displayed with forward match. By extracting in multiple stages and sorting the display order in this way, results that are more likely to be appropriate for the search term are displayed at the top, making it easily to select the one with a higher possibility of being appropriate.

### §4. Function and Effect

When inputting instructions, users can select instructions while confirming the display related to instructions, instruction names, and functionality descriptions. Therefore, users can input instructions even without fully understanding the functionality of the instruction. At this time, character strings described in any of the instructions, instruction names, or functionality descriptions may be extracted using search terms. As a result, since extraction is not limited to instructions alone, users can more easily find the appropriate processing that they need.

Furthermore, instead of merely extracting based on search terms, instructions that have a forward match with the search term may be display with priority. Therefore, even in the case where numerous instructions are extracted, the desired instruction can be easily found.

The priority of the display order is differentiated according to whether the extraction by the search term was done from the instruction, the instruction name, or the functionality description. As a result, instructions that are considered to be more appropriate can be easily selected.

Even in the case where the type of circuit component displayed on the graphical editing screen differs from the type of the selected instruction, it can be converted to an appropriate program element. Therefore, even if a circuit component was placed mistaking a function for a function block, an appropriate control program can be created.

### [Summary]

To solve the problem, a control program editing device according to one aspect of the present invention is a control program editing device for editing a control program of an FA system, which includes: a search term input unit that receives user input of a search term as a user indication for inputting instructions to the control program; an instruction list acquisition unit that acquires an instruction list including candidates of the instructions; instruction names corresponding to the respective instructions; and functionality descriptions corresponding to the respective instructions; an extraction unit that extracts the instructions related to the search term from the instruction list; a display control unit that performs control to display the instructions extracted by the extraction unit, the instruction names of the instructions, and the functionality descriptions of the instructions; a selection unit that receives user input for selecting one of the instructions from among the instructions displayed by the display control unit; and an application unit that inputs the instruction selected by the selection unit into the control program.

To solve the problem, an editing method for control program editing device according to another aspect of the present invention is an editing method of control program editing device for editing a control program of an FA system, which includes: a search term input step of receiving user input of a search term as a user indication for inputting instructions to the control program; an instruction list acquisition step of acquiring an instruction list including candidates of the instructions, instruction names corresponding the respective instructions, and functionality descriptions corresponding to the respective instructions; an extraction step of extracting the instructions related to the search term from the instruction list; a display control step of performing control to display the instructions extracted by the extraction step, the instruction names of the instructions, and the functionality descriptions of the instructions; a selection step of receiving user input for selecting one of the instructions from among the instructions displayed by the display control step; and an application step of inputting the instruction selected by the selection step into the control program.

According to the configuration, when inputting an instruction, the user can select the instruction while confirming the instruction, instruction name, and functionality description. Therefore, the user can input an instruction even if they are not familiar with the instruction and its functionality.

The extraction unit may extract, among character strings in the instructions, in the instruction names, and in the functionality descriptions, the instructions having the search term.

According to the structure, the extraction unit can search (extract) character strings described in any of the instruction, instruction name, or functionality description using a search term. Therefore, since the search is not limited to only the instruction, it is possible to find the necessary process more easily.

The display control unit may perform control to display, with priority the instruction having a forward match with the search term, among the instructions extracted by the extraction unit.

According to the structure, since the instruction having a forward match with the search term is displayed with priority, even in cases where numerous instructions (instruction names, or functionality descriptions) are extracted, the desired instruction can be easily found.

The display control unit may first display, among the instructions extracted by the extraction unit, the instructions, instruction names of the instructions, and functionality descriptions of the instructions having the search term; then display, among the instruction names extracted by the extraction unit, the instructions, instruction names of the instructions, and functionality descriptions of the instructions having the search term; and further display, among the functionality descriptions extracted by the extraction unit, the instructions, instruction names of the instructions, and functionality descriptions of the instructions having the search term.

According to the structure, it is possible to assign priority to the display order of the extracted instructions. Therefore, the one considered to be more appropriate is displayed at the top, allowing for easy selection

The display control unit may control to display a graphical editing screen in which figures representing program elements constituting the control program are connected to each other, and the application unit may make the program element at a position selected by the user on the graphical editing screen as a program element corresponding to the instruction.

According to the structure, even in cases where program elements (circuit components) constituting the control program are incorrectly placed, they can be converted to appropriate program elements.

The instruction may be a function or a function block.

According to the structure, a function or a function block can be selected as the instruction.

The control program editing device according to each aspect of the present invention may be realized by a computer, and in this case, a program for the control program editing device that realizes the control program editing device by a computer by causing the computer to function as each part (software element) included in the control program editing device, and a computer-readable recording medium recording the program, also fall within the scope of the present invention.

### [Example of Software Implementation]

The functionalities of the control program editing device 1 (hereinafter referred to as "device") may be realized by a program that causes a computer to function as the device, and by a program that causes a computer to function as each control block of the device.

In this case, the device includes a computer having at least one control device (for example, a processor) and at least one storage device (for example, memory) as hardware for executing the program. By executing the program with this control device and storage device, each functionality described in the embodiments is realized.

The program may be recorded on one or multiple computer-readable recording media, not temporarily. This recording medium may or may not be included in the device. In the latter case, the program may be supplied to the device via any wired or wireless transmission medium.

Moreover, it is possible to realize a part or all of the functionalities of each of the above control blocks by logical circuits. For example, an integrated circuit formed with logical circuits that function as each of the above control blocks is also included in the scope of the present invention. Moreover, it is also possible to realize the functionalities of each of the above control blocks by, for example, a quantum computer.

Furthermore, each process described in the embodiments may be executed by AI (Artificial Intelligence). In this case, the AI may operate on the control device, or it may operate on another device (for example, an edge computer or a cloud server, etc.).

### [Additional Remarks]

The present invention is not limited to the embodiments, and various changes are possible within the scope shown in the claims. Embodiments obtained by appropriately combining technical means disclosed in different embodiments are also included in the technical scope of the present invention.

### Reference Signs List

1 Control program editing device
11 Search term input unit
12 Instruction list acquisition unit
13 Extraction unit
14 Display control unit
15 Selection unit
16 Application unit
17 Recording unit
17a Instruction table
20 Input device
30 Display device

## Claims

1. A control program editing device for editing a control program of an FA system, the control program editing device comprising:
a search term input unit that receives user input of a search term as a user indication for inputting instructions into the control program;
an instruction list acquisition unit that acquires an instruction list including candidates of the instructions, instruction names corresponding to the respective instructions, and functionality descriptions corresponding to the respective instructions;
an extraction unit that extracts the instructions related to the search term from the instruction list;
a display control unit that performs control to display the instructions extracted by the extraction unit, the instruction names of the instructions, and the functionality descriptions of the instructions;
a selection unit that receives user input for selecting one of the instructions from among the instructions displayed by the display control unit; and
an application unit that inputs the instruction selected by the selection unit into the control program.

2. The control program editing device according to claim 1, wherein the extraction unit extracts, among character strings in the instructions, in the instruction names, and in the functionality descriptions, the instructions having the search term.

3. The control program editing device according to claim 1, wherein the display control unit performs control to display, with priority, the instruction having a forward match with the search term, among the instructions extracted by the extraction unit.

4. The control program editing device according to claim 2, wherein the display control unit
first displays, among the instructions extracted by the extraction unit, the instructions, instruction names of the instructions, and functionality descriptions of the instructions having the search term;
next displays, among the instruction names extracted by the extraction unit, the instructions, instruction names of the instructions, and functionality descriptions of the instructions having the search term; and
further displays, among the functionality descriptions extracted by the extraction unit, the instructions, instruction names of the instructions, and functionality descriptions of the instructions having the search term.

5. The control program editing device according to claim 1, wherein the display control unit controls to display a graphical editing screen in which figures representing program elements constituting the control program are connected to each other, and
the application unit makes the program element at a position selected by user on the graphical editing screen as a program element corresponding to the instruction.

6. The control program editing device according to any one of claims 1 to 5, wherein the instruction is a function or a function block.

7. An editing method for control program editing device that edits a control program of an FA system, the method comprising:
a search term input step of receiving user input of a search term as a user indication for inputting instructions into the control program;
an instruction list acquisition step of acquiring an instruction list including candidates of the instructions, instruction names corresponding to the respective instructions, and functionality descriptions corresponding to the respective instructions;
an extraction step of extracting the instructions related to the search term from the instruction list;
a display control step of performing control to display the instructions extracted by the extraction step, the instruction names of the instructions, and the functionality descriptions of the instructions;
a selection step of receiving user input for selecting one of the instructions from among the instructions displayed by the display control step; and
an application step of inputting the instruction selected by the selection step into the control program.

8. A program for causing a computer to function as the control program editing device according to claim 1, the program causing the computer to function as the search term input unit, the instruction list acquisition unit, the extraction unit, the display control unit, the selection unit, and the application unit.
